# FASCICULE DE BREVET EUROPEEN

(11) **EP 2 418 539 B1**
(45) Date de publication et mention de la délivrance du brevet: **05.11.2014**
(21) Numéro de dépôt: 11176018.7
(22) Date de dépôt: 29.07.2011
(51) Int. Cl.: G03B 15/04

(54) **Dispositif eclairant et de support pour photographier un objet**
Beleuchtungs- und Auflagevorrichtung zum Fotografieren eines Objekts
Lighting and supporting device for photographing an object

(30) Priorité: 11.08.2010 FR 1056545
(43) Date de publication de la demande: 15.02.2012
(73) Titulaire: Altawak, 75020 Paris (FR)
(72) Inventeur: Gras, Philippe, 77320 LA FERTE GAUCHER (FR)
(74) Mandataire: Wagret, Frédéric

(56) Documents cités:
- FR-A1- 2 740 880
- GB-A- 2 464 742
- US-A1- 2003 071 194

## Description

L'invention concerne un dispositif éclairant et de support permettant de positionner correctement un objet, ou même un individu, pour le photographier.

Un tel dispositif peut être utilisé soit seul sous un éclairage naturel ou artificiel, soit dans une boîte à lumière, cette boîte à lumière fournissant alors une lumière appropriée à la prise de vue de l'objet. L'objet pris en photo est destiné à être visualisé sur un support imprimable ou de façon préférentielle sur écran sous forme d'animation photographique simulant le déplacement du point de vision autour de l'objet.

L'invention sera plus particulièrement décrite dans une application de boîte à lumière sans donc y être toutefois limitée.

Depuis quelques années, des dispositifs sont apparus sur le marché pour réaliser rapidement et simplement des visualisations ou des animations d'objets simulant sur écran d'ordinateur le déplacement du point de vision autour de l'objet. De tels dispositifs permettent de capturer des images d'un objet et, en les traitant par un logiciel adapté, de visualiser immédiatement ledit objet sur un écran et de préférence de manière animée.

Ces dispositifs sont conçus pour une utilisation aisée et rapide par tout public, L'objet pris en photo est ainsi reproduit quasi-instantanément sur l'écran de l'ordinateur, en étant aussitôt utilisable sous forme d'images fixes ou animées pour être par exemple mis en ligne sur Internet, en particulier sur des sites de commerce à distance.

De tels dispositifs utilisent de manière connue :
- un plateau tournant sur lequel est agencé l'objet à photographier sous 360°;
- des moyens de prises de vue, tel qu'un appareil photographique;
- des moyens d'éclairage qui peuvent être naturels ou artificiels; l'utilisation d'une boîte à lumière (ou caisson lumineux) dans lequel est placé le plateau tournant étant une variante des moyens d'éclairage.

De façon préférentielle, ces dispositifs sont connectés à un ordinateur et pilotés par un logiciel qui contrôle le plateau tournant, l'allumage et l'extinction des moyens d'éclairage, et les moyens de prises de vue.

Afin d'assurer une animation de l'objet sur l'écran, c'est-à-dire une visualisation en rotation de l'objet, une multiplicité de prises de vue de l'objet est donc réalisée sur l'ensemble de son pourtour. Les moyens de prises de vue étant fixes, l'objet doit pouvoir être mis en rotation sur 360° de façon à capturer des images selon une multiplicité d'angles de vue différents.

A cette fin, l'objet est agencé sur un plateau tournant dont la rotation est actionnée manuellement, ou bien préférentiellement motorisée en étant pilotée de manière électronique via un programme informatique synchronisé sur le fonctionnement des moyens de prises de vue.

Néanmoins, le positionnement de l'objet vis-à-vis de l'objectif des moyens de prises de vue d'une part, et du centre du plateau d'autre part, nécessite de la précision pour parvenir à photographier soigneusement et sous un bon éclairage l'objet, et obtenir une animation centrée de l'objet sur écran. Sans repère de positionnement, le travail de l'opérateur devient fastidieux et reste imprécis.

Par ailleurs, la visualisation de l'objet à l'écran est généralement souhaitée sur un fond blanc homogène sans percevoir le support (plateau) dudit objet sur lequel ce dernier a été photographié. Or, si l'opération de capture d'images est réalisée dans des conditions d'éclairage relativement appropriées combinées à un plateau de couleur blanche et un arrière-plan blanc de photographie, le rendu visuel s'avère parfois décevant car les bords du plateau restent visibles à l'écran.

L'invention a donc pour but de fournir un dispositif pour le support d'un objet à photographier et auquel sont associés des moyens de repérage pour :
- le positionnement approprié de l'objet sur le dispositif de support ;
- le positionnement des moyens de prise de vue par rapport au centre du dispositif de support ;
- le positionnement du dispositif de support à l'intérieur d'un caisson lumineux dans le cas d'une utilisation d'un tel caisson.

L'invention a également pour but d'obtenir une visualisation fixe ou animée de l'objet sur laquelle la présence du dispositif de support est rendu invisible.

Selon l'invention, le dispositif éclairant et de support formant un socle pour un objet destiné à être pris en images, comporte un plateau et est associé à des moyens d'éclairage. Il est caractérisé en ce que les moyens d'éclairage comprennent des premiers moyens d'éclairage qui, allumés, forment un repère se dessinant sur la surface principale du plateau et servant au positionnement et centrage de l'objet sur le plateau, et des seconds moyens d'éclairage qui associés au plateau forment un rétro-éclairage.

Les premiers moyens d'éclairage servent à visualiser temporairement un repère sur le socle de l'objet afin de positionner correctement
- l'objet au centre du plateau;
- les moyens de prise de vue par rapport au centre du plateau;
- le centre du plateau dans un caisson lumineux, de préférence au centre de celui-ci.

Le rétro-éclairage du support présente par ailleurs l'avantage de rendre invisible le support sur l'image finale de l'objet.

Les seconds moyens d'éclairage sont de préférence allumés une fois les premiers moyens éteints. Ils permettent de fournir un rétro-éclairage du plateau afin de produire une lumière diffusante tout autour du volume du plateau, aussi bien au-delà de son corps principal qui forme la face sur laquelle repose l'objet que de son bord périphérique. Cet éclairage bordant l'objet permet, lorsque celui-ci sera photographié sur un fond blanc, de ne pas distinguer le socle sur lequel repose l'objet.

Selon une caractéristique, le dispositif comporte une embase intégrant les premier et second moyens d'éclairage, et le plateau qui est associé à l'embase pour constituer un couvercle et ménager entre eux deux un espace adapté au logement desdits moyens d'éclairage.

Selon une autre caractéristique, le plateau, comprenant en particulier une surface principale et un bord périphérique, est apte à diffuser la lumière. Aussi, le plateau est en un matériau transparent ou translucide, en étant à base de verre, ou de matière plastique du type PMMA, PVC, polycarbonate, polyéthylène, et est à fonction diffusante.

Les premiers moyens d'éclairage comporte des sources d'éclairage ponctuelles, telles que des diodes électroluminescentes (« DEL », ou « LED » en anglais) qui sont de couleur.

Ces premiers moyens d'éclairage comportent des sources d'éclairage ponctuelles, agencées en forme de croix dont le centre correspond au centre du plateau, ou en forme de cercles concentriques vers le centre du plateau. La forme géométrique obtenue par l'agencement des sources correspond au dessin du repère éclairant engendré au niveau du plateau.

Dans une variante préférée, les premiers moyens d'éclairage comportent au moins un faisceau laser dessinant le repère lumineux au niveau de la surface principale du plateau.

Selon une autre caractéristique, les seconds moyens d'éclairage comprennent des sources ponctuelles d'éclairage, émettant une lumière blanche, et étant réparties de manière à fournir une lumière homogène émanant de l'ensemble du volume du plateau, en particulier depuis la surface principale du plateau et son bord périphérique.

Avantageusement, l'intensité des seconds moyens d'éclairage est variable.

De préférence, le plateau est rotatif. Cette rotation est par exemple entraînée par un moteur, et contrôlée préférentiellement par un dispositif électronique, tel que par un logiciel au moyen d'une liaison informatique. Le dispositif de support est notamment utilisé dans une boîte à lumière pour la capture d'images et le traitement de celles-ci en vue d'une visualisation sous forme d'animation simulant le déplacement du point de vision autour de l'objet. Dans une telle utilisation, des moyens complémentaires d'éclairage peuvent être prévus à l'intérieur de la boîte pour générer un repère lumineux supplémentaire au-dessus du plateau afin de faciliter d'une part le centrage du plateau dans le caisson et d'autre part le centrage de l'objet sur ledit plateau.

Des moyens complémentaires d'éclairage peuvent être prévus à l'intérieur de la boîte en étant aptes à éclairer le dispositif de support pour constituer un repère supplémentaire de centrage du dispositif de support au centre de la boîte et de l'objet sur ledit dispositif.

La présente invention est maintenant décrite à l'aide d'exemples uniquement illustratifs et nullement limitatifs de la portée de l'invention, et à partir des illustrations ci-jointes, dans lesquelles :
- La figure 1 est une vue schématique éclatée d'un dispositif de support selon l'invention;
- La figure 2 est une variante de réalisation de la figure 1 ;
- Les figures 3 et 4 sont des vues schématiques en perspective du dispositif de la figure 1 procurant respectivement deux éclairages distincts ;
- La figure 5 illustre schématiquement une boîte à lumière intégrant le dispositif de la figure 1 ;

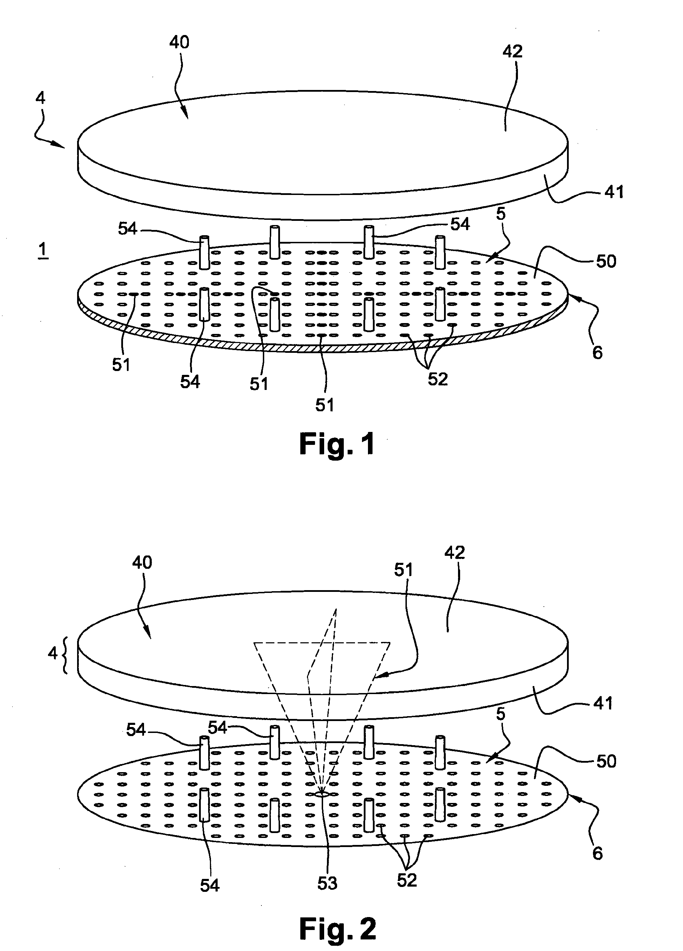

Le dispositif de support 1 illustré sur les figures 1 à 4 constitue un support pour un objet destiné à être photographié. Ce support permet de positionner correctement l'objet vis-à-vis de l'objectif des moyens de prises de vue destiné à le photographier. En outre, si le support est couplé à des moyens de rotation, l'objet peut ainsi être mis en rotation afin d'être présenté sous différents angles de positionnement en regard des moyens de prise de vue.

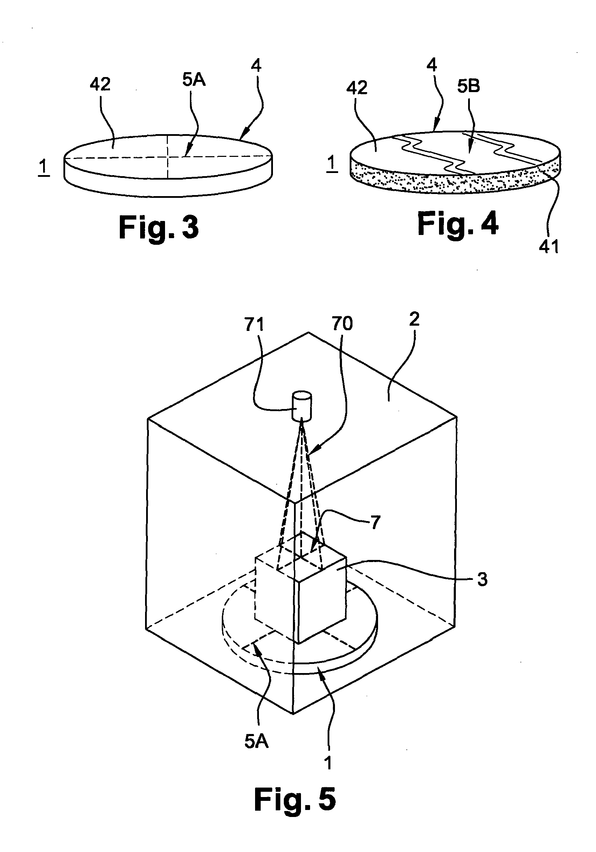

Plus particulièrement, ce dispositif de support 1 est par exemple placé à l'intérieur d'une boîte à lumière 2 telle qu'illustrée par transparence sur la figure 5. Le dispositif de support pourrait en variante constituer directement le plancher de la boîte à lumière,

Une telle boîte à lumière procure un éclairage adapté aux prises de vue d'un objet 3 agencé sur le dispositif de support 1. Les moyens de prise de vue non illustrés sont placés à l'intérieur ou à l'extérieur de la boîte ; dans ce dernier cas, une ouverture est agencée au niveau de l'un des côtés de la boîte de manière à pouvoir viser l'objet,

Un exemple d'application de la capture par un tel système d'une multitude de prises de vue d'un objet, voire d'un individu avec des dimensions appropriées quant à la boîte à lumière et au dispositif de support, est la génération d'animations photographiques grâce à des moyens de traitement du type logiciel pour la visualisation dudit objet, de façon préférentielle sur un écran d'ordinateur, avec simulation du déplacement du point de vision autour de l'objet.

Le dispositif de support, illustré sur les vues éclatées des figures 1 et 2, comporte un plateau 4 et des moyens d'éclairage 5. Les moyens d'éclairage 5 sont agencés sur une embase 6 qui est destinée à être associée au plateau 4. En position assise du dispositif pour sa mise en oeuvre, l'embase 6 est dans un plan inférieur, tandis que le plateau 4 est dans un plan supérieur, au-dessus de l'embase. La face supérieure du plateau est destinée à accueillir l'objet ou l'individu à photographier.

L'association de l'embase au plateau 4 peut être réalisée de différentes manières. Le plateau peut être posé simplement sur l'embase, ou fixé de sorte que le dispositif 1 forme un ensemble monobloc tel que visible sur les figures 3 et 4

Les moyens d'éclairage 5 procurent deux types d'éclairage distincts au travers du plateau, un premier éclairage 5A illustré sur la figure 3 et dessinant un repère sur la face supérieure du plateau, et un second éclairage 5B illustré sur la figure 4, constituant un rétro-éclairage.

Le premier éclairage 5A formant un repère aide :
- au positionnement de l'objet, de préférence selon un centrage de l'objet par rapport à l'ensemble de la surface du plateau ;
- au positionnement du centre du plateau 4 par rapport à un repère auxiliaire donné par un dispositif lumineux, placé extérieurement au plateau, au plafond d'un caisson par exemple;
- au positionnement, de préférence axial, des moyens de prise de vue 3 par rapport au centre du plateau.

Le second éclairage 5B forme un rétro-éclairage, c'est-à-dire une lumière diffusante homogène émanant de l'ensemble du volume du plateau.

En regard des figures 1 et 2, le plateau 4 comporte un corps plan 40 et un rebord périphérique 41 correspondant à l'épaisseur du plateau 4. Il est par exemple de forme circulaire.

Le corps plan 40 présente une face principale 42 destinée à recevoir l'objet en dépôt, et une face opposée qui est en regard des moyens d'éclairage 5 et non visible sur les figures car cachée par le rebord 41.

Le rebord périphérique 41 s'étend perpendiculairement à la face 42 du corps plan. Il présente une hauteur adaptée de façon à ménager un volume caché sous le corps plan pour accueillir les moyens d'éclairage.

Selon l'invention, les moyens d'éclairage 5 sont supportés à titre d'exemple par une plaque 50 et comprennent des premiers moyens d'éclairage 51 pour fournir le repère 5A lorsqu'ils sont allumés, et des seconds moyens d'éclairage 52 procurant l'éclairage 5B lorsqu'ils sont allumés tandis que les premiers moyens 51 sont éteints.

La plaque 50 est intégrée ici à l'embase 6. Elle peut y être assemblée de différentes manières, par vissage ou clipsage, ou collage, ou sertissage.

Afin de loger l'épaisseur des moyens d'éclairage et assurer la bonne répartition spatiale de la lumière émise, le corps plan 40 du plateau 4 est agencé à une certaine distance de la face supérieure de l'embase 6. Les efforts supportés par le plateau 4 sont transmis à l'embase 6 par le rebord périphérique 41 et/ou par des plots 54 formant entretoises.

Les plots 54 optionnels sont rendus solidaires de l'embase 6 soit par une fabrication monobloc comme le permet une réalisation par moulage, soit par une fixation du type collage, vissage, clipsage ou serrage. L'extrémité des plots en contact avec le plateau supérieur est de façon préférentielle en forme de cône tronqué de façon à limiter la surface de contact avec le corps 40 du plateau 4 qui, si elle était trop importante relativement à l'épaisseur du corps 40, provoquerait la formation d'une ombre portée sur la face visible supérieure 42 du plateau. A l'endroit des plots 54, l'embase 6 est percée afin de permettre le passage de ces plots au travers lorsque lesdits plots ne sont pas réalisés par moulage avec la plaque.

Dans un premier mode de réalisation, les premiers moyens d'éclairage 51 (points noirs sur la figure 1) sont agencés à certains endroits de la plaque 50 pour engendrer, lorsqu'ils sont allumés, une forme géométrique spécifique constituant le repère 5A (figure 3). En outre, ils sont adaptés à fournir une luminosité intense pour visualiser sans difficulté ledit repère au travers de la face 42 du plateau.

Le repère 5A peut correspondre à différentes formes géométriques, telles qu'une croix, illustrée sur la figure 3, ou une pluralité de cercles concentriques, ou toute autre forme permettant de marquer le centre du plateau afin de positionner l'objet vis-à-vis de ce centre.

Les moyens d'éclairage 51 sont par exemple constitués par des diodes électroluminescentes (DEL), et avantageusement de couleur afin de distinguer parfaitement le dessin du repère généré.

Dans un second mode de réalisation préféré car apportant une meilleure précision du repérage, les premiers moyens d'éclairage 51 comprennent tels qu'illustrés sur la figure 2 un faisceau laser procurant le motif voulu du repère 5A, ici en croix sur la face 42 du plateau.

A titre d'exemples non limitatif d'association, ce laser peut être fixé à l'embase 6, sur la plaque 50, ou bien situé sous l'embase 6, un orifice 53 étant ménagé, de préférence au centre de la plaque 50, ainsi qu'un autre en regard dans l'embase, pour autoriser le passage du faisceau lumineux généré par le laser.

Les seconds moyens d'éclairage 52 forment avec le plateau 4 un rétro-éclairage. Ainsi, le plateau est configuré pour transmettre depuis sa face 42 et son rebord 41 une lumière diffusante émise à partir des seconds moyens d'éclairage 52 situés sous le plateau en regard de la face opposée à la face 42.

En regard des figures 1 et 2, les seconds moyens d'éclairage 52 sont illustrés par des cercles noirs sur fond grisé de la plaque 50. Ils comprennent des sources ponctuelles de lumière, telles que des DEL, qui sont réparties régulièrement sur l'ensemble de la plaque 50.

Les sources lumineuses des seconds moyens d'éclairage 52 émettent une lumière blanche.

En outre, le plateau 4 est fait d'un matériau diffusant la lumière. Il est transparent ou translucide et est par exemple à base de verre, ou de matière plastique telle que du poly méthacrylate de méthyle (PMMA), du polycarbonate, du polychlorure de vinyle (PVC), ou du polyéthylène. La fonction diffusante est réalisée de manière connue dans la masse du plateau (rugosité en surface ou intégration d'une couche organique diffusante dans la masse), ou bien en étant rapportée à l'une des faces du plateau ou prise en feuilleté grâce à un film diffusant en matière plastique par exemple.

En variante, les sources d'éclairage 52 pourraient être des lampes flash ou des tube fluorescents.

Il est également envisageable d'utiliser dans une autre variante de moyens d'éclairage diffusants, un dispositif à diode électroluminescente organique, dit « OLED » pour « Organic Light Emitting Diodes » en anglais. L'OLED serait conçu spécifiquement pour n'éclairer que d'un seul côté et de manière diffusante.

Ainsi, la combinaison de la fonction diffusante du plateau 4 (corps 40 et rebord 41) et la répartition surfacique des secondes sources d'éclairage 52 engendre une émission de lumière homogène et blanche dans l'environnement extérieur du dispositif de support de l'objet. Aussi, la prise d'images dans ces conditions d'éclairage du support, couplées à un éclairage direct approprié sur l'objet, permet de visualiser l'objet sur un fond parfaitement blanc, le support de l'objet étant rendu en quelque sorte invisible.

Les allumages des premiers et seconds moyens d'éclairage sont de préférence commandés de manière dissociée afin de les contrôler indépendamment.

L'intensité lumineuse des seconds moyens d'éclairage 52 fournissant le rétro-éclairage peut être variable. L'intensité variable d'un rétro-éclairage par DEL est contrôlée par une alimentation modulée du type PWM (pour «Pulse Width Modulation » en anglais). L'intensité variable d'un rétro-éclairage par tubes fluorescents est de préférence contrôlée par un ballast électronique gradable à partir d'un signal numérique ou analogique. Dans ce cas, la carte électronique contrôle :
- l'allumage et l'extinction des premiers et des seconds moyens d'éclairage;
- la variation d'intensité des seconds moyens d'éclairage;
- le moteur électrique qui entraîne la rotation du plateau lorsque celui-ci est motorisé.

Enfin, l'allumage et l'extinction des premiers et seconds moyens peuvent être commandés manuellement. Toutefois, le fonctionnement est de préférence piloté électroniquement, en particulier lorsque le dispositif de support est intégré à une boîte à lumière connectée à un ordinateur.

Avantageusement, le dispositif de support 1 comporte des moyens de rotation du plateau 4. L'entraînement par des moyens de rotation est par exemple obtenu à l'aide d'un moteur pas à pas dont l'axe de sortie supporte une poulie crantée qui entraîne au moyen d'une courroie crantée une autre poulie crantée solidaire de l'embase 6. La rotation de l'embase 6 est faite autour d'un axe central perpendiculaire au plan de l'embase, ou autour d'un axe central fonctionnel défini par le centre d'une couronne à billes dont la partie mobile est rendue solidaire de l'embase 6.

En variante, l'entraînement par poulies et courroie crantées peut être remplacé soit par un dispositif à friction à l'aide d'un galet solidaire de l'axe moteur et en contact forcé avec l'embase 6, soit par un dispositif par engrenage.

L'ensemble des mécanismes d'entraînement est agencé et fixé dans une coque située sous l'embase 6.

En regard de la figure 5, la boîte à lumière 2 intègre en étant disposé sur son plancher le dispositif de support 1 de l'invention. En éclairant les premiers moyens 51, le repérage 5A apparaît afin de positionner l'objet 3. Pour faciliter davantage le centrage de l'objet sur le dispositif 1, un système de repérage complémentaire 7 est prévu. Ce système complémentaire permet également de positionner le plateau parfaitement au centre du caisson par superposition des repères.

Ce repérage 7 constitue un éclairage supplémentaire se reportant sur le dessus de l'objet 3. De préférence, il forme un motif en croix dont l'intersection constitue le centre de l'objet et les lignes coïncident avec celles du repère 5A.

Ce repérage 7 est obtenu de préférence par des faisceaux lasers 70 issus d'une source 71 agencée au niveau du plafond de la boîte 11 et orientée vers le dispositif 1. L'allumage de la source 71 est de préférence piloté de manière électronique.

## Revendications

1. Dispositif éclairant et de support pour un objet destiné à être pris en images, comportant un plateau (4) et étant associé à des moyens d'éclairage (51, 52), comprenant des premiers moyens d'éclairage (51) qui, allumés, forment un repère (5A) se dessinant sur la surface principale (42) du plateau (4), et des seconds moyens d'éclairage (52) qui associés au plateau (4), forment un rétro-éclairage, **caractérisé en ce qu'**il comporte une embase (6) intégrant les premiers et seconds moyens d'éclairage (51, 52), et le plateau (4) associé à l'embase, l'embase étant à distance du plateau pour fournir un espace adapté au logement desdits moyens d'éclairage.

2. Dispositif selon la revendication 1, **caractérisé en ce que** le plateau (4), comprenant en particulier une surface principale (42) et un bord périphérique (41), est apte à diffuser la lumière.

3. Dispositif selon l'une quelconque des revendications précédentes, **caractérisé en ce que** premiers moyens d'éclairage (51) comportent des sources d'éclairage ponctuelles, telles que des DEL de couleur.

4. Dispositif selon l'une quelconque des revendications précédentes, **caractérisé en ce que** les premiers moyens d'éclairage (51) comportent des sources d'éclairage ponctuelles agencées en forme de croix dont le centre correspond au centre du plateau (4), ou en forme de cercles concentriques vers le centre du plateau.

5. Dispositif selon l'une des revendications 1 à 4, **caractérisé en ce que** les premiers moyens d'éclairage (51) comportent au moins un faisceau laser dessinant un repère lumineux au niveau de la surface principale (42) du plateau.

6. Dispositif selon l'une quelconque des revendications précédentes, **caractérisé en ce que** les seconds moyens d'éclairage (52) pouvant être d'intensité variable comprennent des sources ponctuelles d'éclairage émettant une lumière blanche et étant réparties de manière à fournir une lumière homogène émanant de l'ensemble du volume du plateau (4), en particulier depuis la surface principale et le bord périphérique du plateau.

7. Dispositif selon l'une quelconque des revendications précédentes, **caractérisé en ce que** le plateau (4) est rotatif.

8. Dispositif selon l'une quelconque des revendications précédentes, **caractérisé en ce qu'**il est utilisé dans une boîte à lumière (2) pour la capture d'images et le traitement de celles-ci.

9. Dispositif selon la revendication 8, **caractérisé en ce que** des moyens complémentaires d'éclairage sont prévus à l'intérieur de la boîte en étant aptes à éclairer le dispositif de support pour constituer un repère supplémentaire de centrage.

## Patentansprüche

1. Leuchtkörper mit Stützfunktion für einen Gegenstand, von dem Bilder angefertigt werden sollen, bestehend aus einer Platte (4) und in Verbindung mit Beleuchtungsmitteln (51, 52), die primäre Beleuchtungsmittel (51) umfassen, die in eingeschaltetem Zustand einen Bezugspunkt (5A) bilden, der sich auf der Hauptoberfläche (42) der Platte (4) abzeichnet, und sekundäre Beleuchtungsmittel (52), die in Verbindung mit der Platte (4) eine Hintergrundbeleuchtung bilden, **dadurch gekennzeichnet, dass** er aus einem Basisträger (6) besteht, in den die primären und sekundären Beleuchtungsmittel (51, 52) integriert sind, und die Platte (4) mit dem Basisträger verbunden ist, wobei der Basisträger sich in einer bestimmten Entfernung von der Platte befindet, um ausreichend Platz für die genannten Beleuchtungsmittel zu bieten.

2. Vorrichtung nach Anspruch 1, **dadurch gekennzeichnet, dass** die Platte (4), die insbesondere eine Hauptoberfläche (42) und einen Umfangsrand (41) umfasst, dafür geeignet ist, Licht zu streuen.

3. Vorrichtung nach einem vorausgehende Ansprüche, **dadurch gekennzeichnet, dass** die primären Beleuchtungsmittel (51) punktuelle Lichtquellen wie z.B. Farb-LEDs aufweisen.

4. Vorrichtung nach einem vorausgehende Ansprüche, **dadurch gekennzeichnet, dass** die primären Lichtquellen (51) punktuelle Lichtquellen aufweisen, die in Kreuzform angeordnet sind, wobei sich die Mitte des Kreuzes in der Mitte der Platte (4) befindet, oder aber die in konzentrischen Kreisen um die Mitte der Platte herum angeordnet sind.

5. Vorrichtung nach einem der Ansprüche 1 bis 4, **dadurch gekennzeichnet, dass** die primären Beleuchtungsmittel (51) mindestens einen Laserstrahl aufweisen, der einen Lichtbezugspunkt auf der Ebene der Hauptoberfläche (42) der Platte bildet.

6. Vorrichtung nach einem vorausgehende Ansprüche, **dadurch gekennzeichnet, dass** die sekundären Beleuchtungsmittel (52) von variabler Intensität sein können und punktuelle Lichtquellen aufweisen, die ein weißes Licht abgeben und so angeordnet sind, dass von der gesamten Platte (4) ein gleichmäßiges Licht ausgeht, insbesondere von der Hauptoberfläche und dem Umfangsrand der Platte.

7. Vorrichtung nach einem vorausgehende Ansprüche, **dadurch gekennzeichnet, dass** die Platte (4) drehbar ist.

8. Vorrichtung nach einem vorausgehende Ansprüche, **dadurch gekennzeichnet, dass** es in einem Leuchtkasten (2) zum Aufnehmen und Bearbeiten von Bildern eingesetzt wird.

9. Vorrichtung nach Anspruch 8, **dadurch gekennzeichnet, dass** im Inneren des Kastens zusätzliche Beleuchtungsmittel vorgesehen sind, die zur Beleuchtung des StützVorrichtunges geeignet sind und einen zusätzlichen Bezugspunkt zur Zentrierung bilden.

## Claims

1. A lighting device and support for an object whose images are to be taken, consisting of a plate (4) and associated with lighting means (51, 52), including the primary lighting means (51) which, when lit, creates a reference mark (5A) which appears on the main surface (42) of the plate (4), and the secondary lighting means (52) which, when associated with the plate (4), form backlighting, **characterised in that** it is comprised of a base (6) which incorporates the primary and secondary lighting means (51, 52), and the plate (4) associated with the base, the base being at a distance from the plate to provide a space suitable for housing said lighting means.

2. Device according to claim 1, **characterised in that** the plate (4), in particular comprised of a main surface (42) and a circumferential edge (41), is able to diffuse light.

3. Device according to any one of the previous claims, **characterised in that** the primary lighting means (51) includes point light sources, such as colour LEDs.

4. Device according to any one of the previous claims, **characterised in that** the primary lighting means (51) include point light sources laid out in the form of a cross whose centre corresponds to the centre of the plate (4), or in the form of concentric circles towards the centre of the plate.

5. Device according to claims 1 to 4, **characterised in that** the primary lighting means (51) includes at least one laser beam that draws a lit reference point at the level of the main surface (42) of the plate.

6. Device according to any one of the previous claims, **characterised in that** the secondary lighting means (52) can be of variable intensity, and include point light sources emitting white light and being distributed to provide a homogeneous light reflected by the entire volume of the plate (4), in particular from the main surface and the circumferential edge of the plate.

7. Device according to any one of the previous claims, **characterised in that** the plate (4) is rotary.

8. Device according to any one of the previous claims, **characterised in that** it is used in a lighting box (2) for capturing images and processing them.

9. A device according to claim 8, **characterised in that** additional lighting means are provided within the box and are able to light the support device to constitute an additional centring reference mark.
